## Europäisches Patentamt

## European Patent Office

## Office européen des brevets

(19)

(11) Numéro de publication: **0 082 159 B1**

(12) **FASCICULE DE BREVET EUROPEEN**

(45) Date de publication du fascicule du brevet:
**19.02.86**

(51) Int. Cl.⁴: **B 60 B 1/04**, B 60 B 31/02

(21) Numéro de dépôt: **82901850.6**

(22) Date de dépôt: **23.06.82**

(86) Numéro de dépôt international:
**PCT/FR 82/00104**

(87) Numéro de publication internationale:
**WO 83/00032 (06.01.83** Gazette 83/1)

(54) **DISPOSITIF POUR POSITIONNER ET INSERER DES RAYONS DANS LES TROUS D'UN MOYEU DE ROUE A RAYONS.**

(30) Priorité: **24.06.81 FR 8112905**

(43) Date de publication de la demande:
**29.06.83 Bulletin 83/26**

(45) Mention de la délivrance du brevet:
**19.02.86 Bulletin 86/8**

(84) Etats contractants désignés:
**AT BE CH DE FR GB LI LU NL SE**

(56) Documents cités:
**FR - A - 1 129 669**
**FR - A - 2 153 077**

(73) Titulaire: **CENTRE DE PRODUCTION MECANIQUE-FRANCE, Zone Industrielle Saint Paul, F-74330 Epagny (FR)**

(72) Inventeur: **CARMINATI, Julien, 24, rue de Verdun, F-74000 Annecy-le-Vieux (FR)**

(74) Mandataire: **de Beaumont, Michel, Cabinet Poncet B.P. 317, F-74008 Annecy Cédex (FR)**

ACTORUM AG

## Description

La présente invention concerne un dispositif pour injecter des rayons dans un moyeu de roue à rayons, pour le montage automatique de telles roues.

Dans les techniques actuelles de fabrication de roues à rayons, les moyeux de roues comportent généralement un axe central cylindrique, limité à ses deux extrémités par deux flasques perpendiculaires comportant une couronne de trous pour recevoir les extrémités des rayons reliant le moyeu à la jante de la roue. Dans la couronne de trous, les branches libres des rayons sont introduites alternativement de l'extérieur et de l'intérieur.

L'introduction des rayons dans les couronnes de trous s'est faite, jusqu'ici, le plus souvent à la main. Pour cela, le moyeu est fixé selon un axe vertical, et on introduit manuellement, par le haut et par gravité, les rayons dans un trou sur deux des flasques des moyeux supérieur et inférieur; on tourne alors le moyeu à moitié rayonné de cent quatre vingt degrés pour introduire, encore une fois par le haut, les rayons dans les trous restants.

Le brevet FR-A-1 129 669 décrit un dispositif automatique pour positionner et insérer les rayons dans les couronnes de trous; le moyeu est fixé sur un support selon un axe vertical; un support guide permet d'amener des goulottes verticales au voisinage du moyeu et de l'en éloigner; des moyens amènent des rayons un à un dans les goulottes pour leur introduction par gravité dans les trous du moyeu.

Ces procédés et dispositifs connus demandent beaucoup de temps et d'habileté, et il peut arriver que les rayons s'enchevêtrent lors de la rotation de cent quatre vingt degrés.

La présente invention a notamment pour objet d'obvier aux inconvénients des méthodes connues en proposant un dispositif permettant l'enfilage de rayons sur des moyeux disposés avec un axe horizontal, l'introduction des rayons dans les trous se faisant selon une direction sensiblement horizontale.

Un autre objet de l'invention est de proposer un tel dispositif pour positionner et insérer les rayons qui permette une introduction rapide de ces rayons dans les trous sans déformation de la tige des rayons.

Selon un autre objet, l'invention propose un dispositif permettant un positionnement très précis du rayon en regard du trou correspondant.

Un autre objet de l'invention est de permettre le dégagement du moyeu, avant et après introduction des rayons.

Pour ce faire, et selon l'invention, le dispositif comprend, comme connu par FR-A-1 129 669, un support guide formant goulotte pour recevoir et guider la tige d'un rayon, des moyens pour amener la goulotte au voisinage du moyeu d'une roue et l'en retirer, et des moyens pour amener des rayons un par un dans la goulotte, et est caractérisé en ce que le moyeu est positionné sur son support avec son axe orienté horizontalement; la goulotte est orientée selon une direction sensiblement horizontale, et est ouverte vers le haut; des moyens sont prévus pour propulser un rayon dans la goulotte en direction du moyeu, et des moyens sont prévus pour maintenir la tige du rayon dans la goulotte lors de la propulsion en direction du moyeu.

Selon une caractéristique additionelle de l'invention, les moyens pour propulser le rayon comprennent un chariot, coulissant sur le support guide, entraîné par des moyens d'entraînement en une première position dans laquelle le chariot est en recul pour permettre l'introduction d'un rayon dans la goulotte, et une seconde position dans laquelle le chariot est avancé en direction du moyeu pour provoquer la sortie du rayon dans le prolongement de la goulotte, le chariot comprenant une portion avant conformée pour s'engager partiellement dans la goulotte et repousser le rayon; la portion avant forme un logement creux pour recevoir la tête d'un rayon et comprend une facette supérieure formant butée supérieure pour la tête recourbée du rayon, et un fond formant surface de poussée pour appliquer sur la tête du rayon une force dirigée sensiblement selon l'axe de la goulotte. Selon une disposition particulière, la goulotte a une section réduite, légèrement supérieure à la section de la tige de rayon et la tête de rayon dépasse de la goulotte; des moyens maintiennent la tige avec un faible jeu dans la goulotte; ainsi, le rayon est soumis, lors de la poussée de la tête, à un couple tendant à plaquer toute la longueur de la tige sur le fond de la goulotte, de sorte que l'introduction du rayon dans le trou correspondant peut être très rapide sans provoquer la déformation de ce rayon.

Selon une autre caractéristique additionelle de l'invention, le dispositif comprend, en outre, des moyens de guidage supérieurs escamotables, disposés au voisinage de l'extrémité antérieure de la goulotte pour maintenir et guider la tige du rayon dans la goulotte, et des moyens pour provoquer le retrait des moyens de guidage lors du passage de la tête recourbée du rayon; pour cela, on dispose un levier en appui sur la face supérieure ouverte de la goulotte pour former un profil fermé enserrant la tige sur une portion de sa longueur; le levier peut pivoter pour libérer la goulotte et permettre le passage de la tête de rayon, ce levier étant poussé par un prolongement avant du chariot lors de son mouvement d'avance, et étant ramené en position de guidage par des moyens de rappel. Le positionnement du rayon est ainsi très précis, étant maintenu d'une part par les moyens de guidage supérieurs et d'autre part par le chariot.

Selon une autre caractéristique additionnelle de l'invention, le chariot est entraîné par un moteur entraînant en rotation bi-directionelle alternative un câble solidaire du chariot; on diminue ainsi considérablement l'inertie du dispositif mobile, de sorte que les accélérations peuvent être importantes, et que l'insertion du rayon dans le trou correspondant est très rapide.

Selon une autre caractéristique additionnelle de l'invention, le câble solidaire du chariot est tendu entre deux poulies comme le représentent les figures, une première poulie étant sollicitée par le moteur, l'autre poulie étant montée sur un support mobile soumis à des moyens élastiques pour provoquer l'écartement des poulies et la tension du câble selon une force prédéterminée; on réalise ainsi un dispositif d'entraînement limitant la poussée exercée sur le rayon par friction du câble sur les poulies pour éviter la détérioration de la machine en cas de blocage du rayon.

Selon une autre caractéristique additionnelle de l'invention, la goulotte comprend une première partie postérieure à fond arrondi, par exemple demi circulaire, de section suffisante pour permettre la rotation complète de la tête autour de la tige, et dont le fond est légèrement ascendant dans le sens de progression du rayon; une seconde partie antérieure se raccorde à la première en admettant le même plan de symétrie vertical longitudinal, et présente un fond horizontal de section demi-circulaire de diamètre légèrement supérieur au diamètre de la tige. Selon cette disposition, le rayon peut être inséré dans la goulotte avec sa tête en n'importe quelle position, et se retrouve, en fin d'éjection, avec sa tête disposée en haut: le fond ascendant de la partie postérieure de la gorge forme rampe pour diriger progressivement la tête vers le haut lors de la pénétration de la tige dans la partie antérieure rétrécie de la gorge.

Selon une autre caractéristique additionnelle de l'invention, les moyens d'entraînement du chariot produisent successivement deux forces de poussée différentes: une première poussée, d'intensité faible, assure l'avance du rayon; l'intensité de cette poussée est choisie de façon que, en cas de blocage du bout de tige de rayon en butée contre le moyeu, le flambage de la tige de rayon soit faible; une seconde poussée plus forte assure l'éjection du rayon selon une impulsion finale après son introduction dans un trou de flasque; un capteur de position détecte l'introduction du rayon dans un trou et commande ultérieurement la production de la poussée forte. Cette disposition permet de rechercher la position des trous de moyeu en amenant le rayon en butée contre le flasque correspondant et en provoquant le déplacement du moyeu jusqu'à introduction de la tige dans un trou.

D'autres caractéristiques et avantages de la présente invention ressortiront de la description suivante de modes de réalisation particuliers, faite en relation avec les figures jointes parmi lesquelles:

Les figures 1 et 2 représentent en vue de dessus le dispositif selon un mode de réalisation à goulotte étroite, la figure 3 le même dispositif en vue de face.

Les figures 4 à 7 représentent un mode de réalisation à goulotte large. La figure 8 est une vue générale en vue de dessus, illustrant un mode de réalisation où le dispositif comprend des pinces.

Comme le représentent les figures, le dispositif comprend un support guide 1 monté de façon réglable sur un bâti fixe 2. Un dispositif de réglage en position 3 permet de régler suivant au moins deux directions la position du support guide 1 par rapport à un moyeu de roue à rayons disposé sur un support. Ce réglage peut se faire selon des coordonnées polaires au cartésiennes. On pourra toutefois préférer un réglage selon les quatre modes suivants: translation verticale, translation transversale, translation axiale, et rotation horizontale autour du point moyen d'introduction du rayon dans le trou.

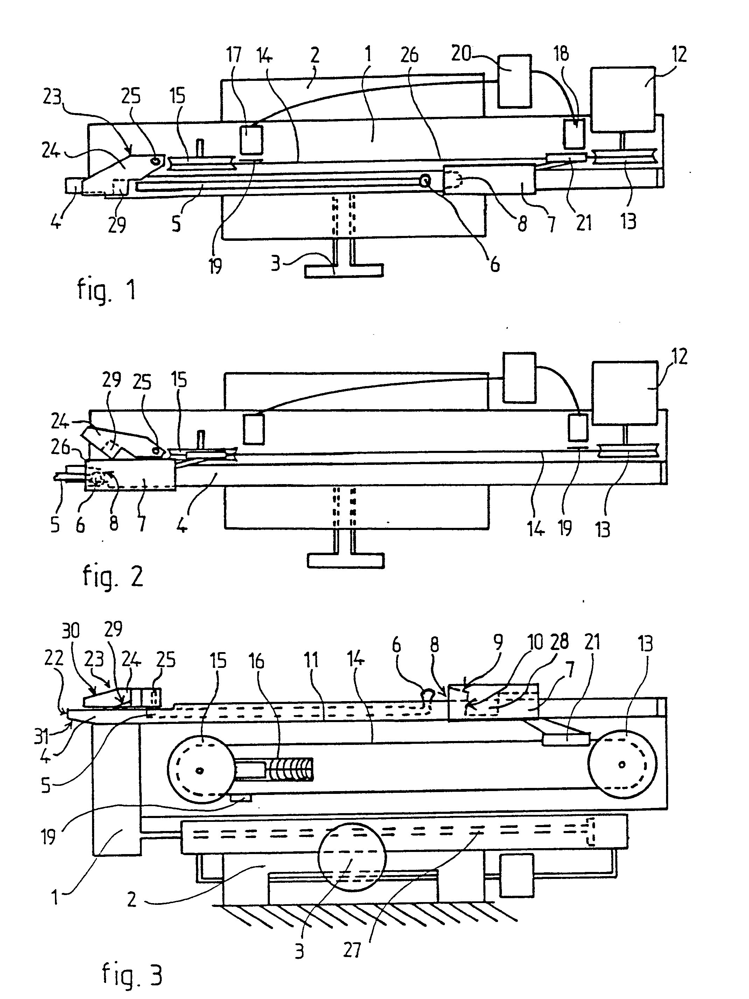

Le support guide 1 comporte sur sa partie supérieure une goulotte 4 pour recevoir et guider la tige 5 d'un rayon de roue à rayons. Un chariot 7 coulisse sur le support guide pour repousser le rayon dans la direction du moyeu où il doit être inséré. Le chariot 7 coulisse entre une première position, représentée sur la figure 1, dans laquelle il est en recul pour permettre l'introduction d'un rayon dans la goulotte, et une seconde position, représentée sur la figure 2, dans laquelle le chariot est en position extrême avancée pour provoquer la sortie du rayon de la goulotte. Le chariot 7 comprend une portion avant formant un logement creux 8 pour recevoir la tête de rayon 6, et comprenant une face supérieure 9 de préférence inclinée comme le représentent les figures et un fond 10 formant surface de poussée. La face supérieure 9 et le fond 10 sont disposés, comme le représente la figure 3, de façon que la tête de rayon 6 s'engage sous la face supérieure pour éviter sa sortie de la goulotte, et vienne en appui sur le fond 10 de sorte que la poussée soit appliquée sur la tête de rayon selon une direction sensiblement parallèle à l'axe de la goulotte.

Le chariot 7, comme le représente la figure 3, comprend un ergot 28 s'engageant partiellement dans la goulotte 4, et dont la face antérieure forme le fond 10. Cet ergot permet d'une part de prolonger à l'intérieur de la goulotte le fond 10, et d'autre part de guider le chariot lors de son mouvement.

Selon un premier mode de réalisation, représenté sur les figures 1 à 3, la goulotte a une section légèrement supérieure à la section de la tige, pour permettre un guidage précis de la tige et un coulissement de cette tige dans la goulotte sans effort. Le rayon est disposé dans la goulotte de façon que la tête de rayon 6 dépasse de la goulotte, sa section étant légèrement supérieure à celle de la tige. Ainsi, la force de poussée transmise par le fond 10 produit un couple tendant à plaquer la tige 5 selon toute la longueur contre le fond 11 de la goulotte, la tête étant en appui contre le fond 10 et sous la facette 9.

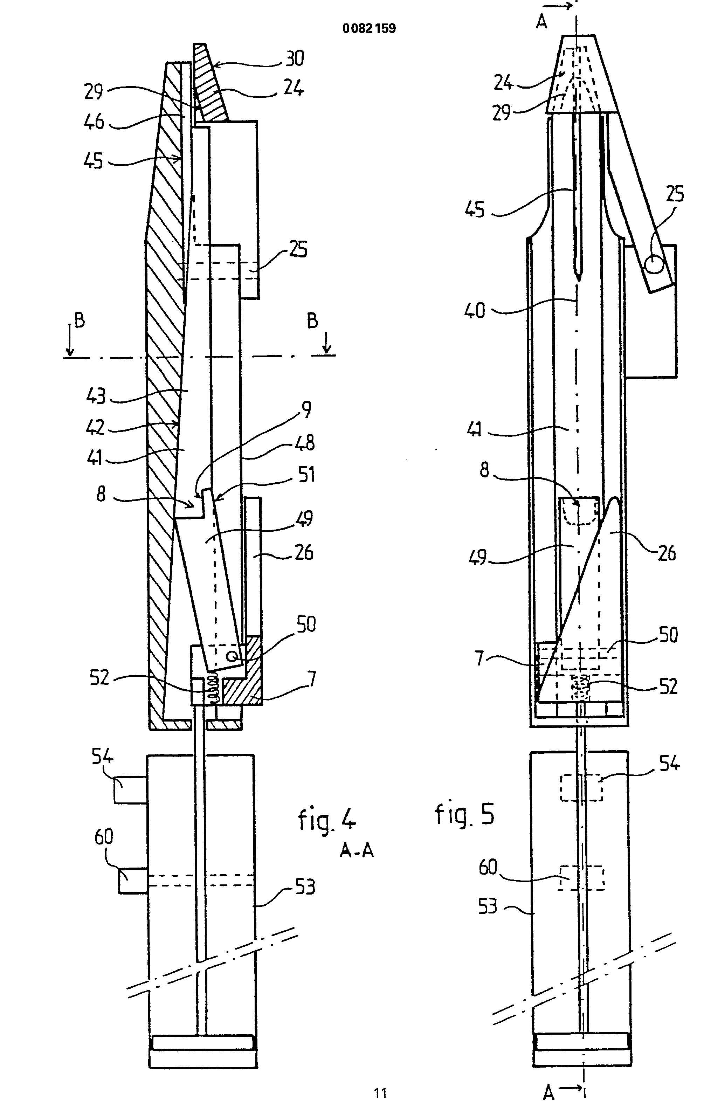

Selon un second mode de réalisation, représenté sur les figures 4 à 7, la goulotte 4 est conformée en deux parties admettant le même plan de symétrie 40 vertical longitudinal. La première partie 41 présente une section suffisante pour permettre la rotation complète de la tête autour de la tige; son fond 42 est de préférence arrondi, par exemple demi-circulaire, et est surmonté de deux flancs verticaux 43 et 44. Le fond 42 a un profil légèrement ascendant dans le sens de progression du rayon. La seconde partie 45, ménagée sur la partie antérieure du dispositif, présente un fond 46 horizontal de section demi-circulaire, épousant la forme de la tige de rayon avec un faible jeu, et se raccorde au fond 42 par deux flancs verticaux.

Dans ce second mode de réalisation notamment, l'ergot 28 est de préférence associé à un racleur, le chariot 7 coulissant horizontalement sur le support guide et notamment les rebords 47 et 48 de la goulotte 4. Le racleur 49 est articulé sur un axe transversal horizontal 50 du chariot. Sa partie antérieure 51 est conformée pour s'engager dans la portion large de la goulotte dont elle épouse la forme et dans laquelle elle est plaquée par des moyens de poussée. Le poids du racleur, monté en porte à faux comme le représentent les figures, peut être suffisant. On pourra toutefois préférer soumettre le racleur à l'action d'un ressort, par exemple un ressort de traction 52 disposé comme le représente la figure. La face frontale du racleur est conformée en creux 8 et comprend la facette supérieure 9.

Selon une première variante, représentée sur les figures 1 à 3, le chariot 7 est entraîné en translation par un moteur 12 entraînant une poulie motrice 13 sur laquelle s'enroule un câble 14 solidaire du chariot, maintenu en tension par une seconde poulie 15 comme le représentent les figures. La seconde poulie 15 est sollicitée en translation par des moyens élastique 16 provoquant son éloignement par rapport à la poulie 13 pour produire la tension du câble 14 selon une force prédéterminée. Ainsi, sous l'action d'une force de retenue du chariot 7, le câble peut glisser sur la poulie motrice 13, de sorte que la force d'entraînement du chariot est limitée à une valeur inférieure à la contrainte de flambage du rayon inséré dans la goulotte, pour éviter les accidents par suite d'un blocage du chariot. Le chariot 7 est entraîné en un mouvement de translation en va et vient alternatif, entre ses deux positions extrêmes, les positions extrêmes étant repérées par un premier détecteur de position 17 et un second détecteur de position 18 sensibles à la présence d'un repère 19 solidaire du câble 14. Des moyens de commande 20, sensibles aux signaux émis par les détecteurs de position 17 et 18, provoquent la rotation du moteur 12 dans un sens puis dans l'autre. Le chariot est solidarisé au câble 14 par un manchon 21.

Selon une seconde variante, représentée sur les figures 4 et 5, le chariot 7 est entraîné en translation par un vérin à double effet 53, ce qui conduit à des réalisations plus robustes. Toutefois il est avantageux, dans ce cas, de prévoir des moyens de commande fournissant deux pressions différentes, comme cela sera expliqué plus loin.

Dans les deux variantes de réalisation des moyens d'entraînement du chariot 7, on prévoit de préférence des moyens de commande permettant de produire successivement deux forces de poussée de rayon d'intensité différentes. Une première poussée, d'intensité faible, assure l'avance du rayon, et une seconde poussée, d'intensité forte, assure l'éjection du rayon par une impulsion finale. Un capteur de position 54 détecte l'introduction du rayon dans un trou et commande ultérieurement la production de la poussée forte.

Pour assurer le maintien de la tige 5 du rayon dans le fond de la goulotte, outre la conformation du chariot 7 permettant d'appliquer la force de poussée sur la tête de rayon 6, on dispose, au voisinage de l'extrémité antérieure 22 de la goulotte et du support guide 1, un moyen de guidage supérieur 23 escamotable. Ce moyen de guidage, selon le mode de réalisation représenté sur les figures, comprend un levier 24, en appui sur la face supérieure ouverte de la goulotte 4, pour former un profil fermé maintenant la tige 5 sur une portion de sa longeur. Le levier 24 peut pivoter, autour d'un axe de rotation 25 et par glissement sur la face supérieure ou ouverte de la goulotte, entre une première position, représentée sur la figure 1, dans laquelle le levier recouvre partiellement la goulotte 4 pour maintenir la tige 5, et une seconde position, représentée sur la figure 2, dans laquelle le levier est escamoté pour permettre le passage de la tête 6 de rayon. Le levier 24 est tourné en seconde position escamotée sous l'action du chariot 7 qui comprend un prolongement avant 26 venant buter contre le levier 24 pour provoquer sa rotation, ce levier étant ramené en position de guidage, représentée en figure 1, sous l'action d'un moyen de rappel non représenté sur les figures. Les mouvement du levier est limité par des butées non représentées sur les figures.

La face inférieure du levier 24 comprend, dans le mode de réalisation des figures 1 à 3, une facette inclinée 29 formant dièdre pour faciliter l'insertion de la tige d'un rayon sous le levier. On pourra toutefois, de préférence, former sur cette face inférieure un demi entonnoir, notamment dans le mode de réalisation des figures 4 à 7.

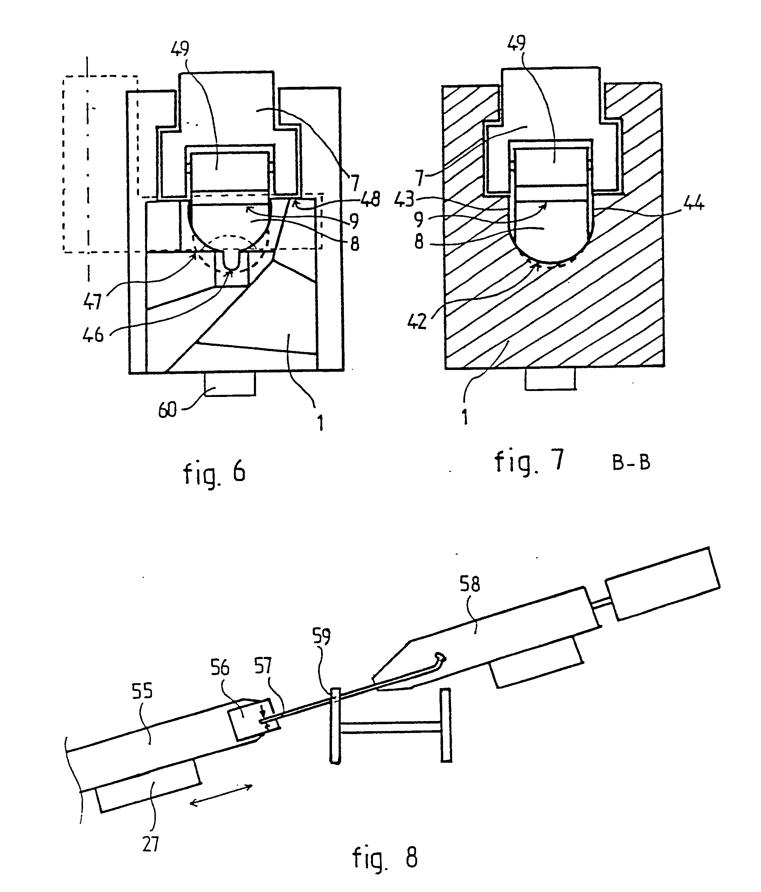

Dans certains dispositifs pour l'insertion de rayons, on dispose plusieurs dispositifs selon la présente invention pour insérer plusieurs rayons à la fois sur un moyeu. Il faut alors prévoir de conformer le leviers 24 et les supports guides pour faciliter le passage des rayons. Il convient en particulier d'éviter qu'un rayon inséré par un premier dispositif ne vienne buter contre un second dispositif destiné à inserer un rayon dans l'autre sens dans un trou voisin. On pourra ainsi prévoir une face supérieure du levier 24 comportant une portion antérieure inclinée 30, et/ou une extrémité antérieure 22 du support guide comportant une portion inférieure 31 en biseau. Les autres parties frontales du support guide peuvent comprendre d'autres facettes inclinées, comme le représente la figure 6 en vue de face.

Outre le dispositif de réglage en position 3 permettant le réglage en position et en direction du support guide 1 sur le bâti fixe 2, le support guide 1 est mobile en translation selon l'axe de la goulotte 4 entre une première position dans laquelle l'extrémité antérieure 22 est au voisinage du moyeu dans lequel doit être inséré le rayon, et une seconde position de recul dans laquelle le moyeu est dégagé. Le mouvement du support guide 1 est provoqué par un vérin à double effet 27 représenté en figure 3.

Selon un mode de réalisation particulier de la présente invention, illustré par la figure 8, chaque support guide 55 comprend en outre une pince 56 conformée et disposée pour agripper et serrer le bout 57 de tige du rayon sortant du support guide 58 opposé après traversée du trou 59 correspondant du moyeu. Dès que le bout de tige est inséré dans la pince, le support guide 55 est reculé à l'aide du vérin correspondant 27, et tire ainsi la tige jusqu'à engagement de la tête contre le trou. La pince libère alors la tige, qui se rabat contre le flasque.

Le dispositif est associé à des moyens de réservoir et d'amenée de rayons, permettant d'introduire les rayons un à un dans la goulotte 4.

Pour assurer le fonctionnement automatique du dispositif, on pourra prévoir de disposer des capteurs de position permettant de contrôler le passage et l'avance des rayons dans la goulotte. Ainsi, un capteur 60, disposé comme le représentent les figures, détecte le passage du piston dans une position correspondant à l'instant où le bout de tige vient en butée contre le flasque du moyeu. En associant ce capteur avec des moyens de temporisation, on détecte les mauvais fonctionnements de la façon suivante: si le capteur n'a pas détecté le piston avant un temps donné, cela signifie que deux rayons sont coincés dans la goulotte ou qu'un rayon est engagé à l'envers. L'opérateur doit intervenir. Si le capteur détecte le piston pendant un temps supérieur à une durée prédéterminée, cela signifie que le rayon bute contre le flasque et qu'il faut tourner le moyeu. D'autres capteurs pourront être disposés pour contrôler les autres phases du fonctionnement.

La présente invention n'est pas limitée aux modes de réalisations qui ont été explicitement décrits, mais elle en inclut les diverses variantes et généralisations contenues dans le domaine des revendications ci-après.

## Revendications

1. Dispositif pour positionner et insérer des rayons dans des trous répartis circonférentiellement sur les flasques d'extrémité d'un moyeu de roue à rayons, le dispositif comportant un support pour le moyeu, une goulotte (4) de guidage des rayons solidaire d'un support guide (1), des moyens (27) permettant, par l'intermédiaire du support guide (1), d'amener la goulotte (4) au voisinage du moyeu et de l'en éloigner, des moyens pour amener des rayons un à un dans la goulotte, caractérisé en ce que le moyeu est positionné sur son support avec son axe orienté horizontalement, la goulotte (4) est orientée selon une direction sensiblement horizontale et est ouverte vers le haut, des moyens (7, 12) sont prévus pour propulser un rayon dans la goulotte en direction du moyeu, et des moyens (9, 10, 24) sont prévus pour maintenir la tige (5) du rayon dans la goulotte lors de la propulsion en direction du moyeu.

2. Dispositif selon la revendication 1, caractérisé en ce que les moyens pour propulser le rayon comprennent un chariot (7), coulissant sur le support guide, entraîné par des moyens d'entraînement entre une première position dans laquelle le chariot est en recul pour permettre l'introduction d'un rayon dans la goulotte, et une seconde position dans laquelle le chariot est avancé pour provoquer la sortie du rayon de la goulotte, le chariot comprenant une portion avant conformée pour s'engager partiellement dans la goulotte et repousser le rayon.

3. Dispositif selon la revendication 2, caractérisé en ce que la portion avant forme un logement creux (8) pour recevoir la tête de rayon et comprend une facette supérieure (9) formant butée pour interdire la sortie de la tête vers le haut, et un fond (10) formant surface de poussée pour appliquer sur la tête de rayon une force dirigée sensiblement selon l'axe de la goulotte (4).

4. Dispositif selon l'une quelconque des revendications 1 à 3, caractérisé en ce qu'il comprend, en outre, des moyens de guidage supérieurs (23) escamotables, disposés au voisinage de l'extrémité antérieure (22) de la goulotte pour maintenir la tige du rayon dans la goulotte, et des moyens (26) pour provoquer le retrait des moyens de guidage lors du passage de la tête recourbée (6) du rayon.

5. Dispositif selon la revendication 4, caractérisé en ce que les moyens de guidage supérieurs comprennent un levier (24) en regard de la face supérieure ouverte de la goulotte (4) pour former en position de guidage un profil fermé enserrant la tige (5) sur une portion de sa longeur, le levier pouvant pivoter pour libérer la goulotte et permettre le passage de la tête (6) de rayon, poussé par un prolongement avant (26) du chariot (7) lors de son avance, puis ramené en position de guidage par des moyens de rapppel.

6. Dispositif selon la revendication 5, caractérisé en ce que le levier (24) pivote autour d'un axe (25) vertical et glisse contre la face supérieure ouverte de la goulotte (4), et en ce que sa face inférieure est conformée en creux évasé vers l'arrière pour former un entonnoir (29) pour faciliter la pénétration d'un rayon sous le levier.

7. Dispositif selon la revendication 6, caractérisé en ce que la position du levier est réglable par translation le long de son axe (25) pour régler la distance entre le fond de la goulotte et la surface inférieure du levier à une valeur légèrement supérieure au diamètre de la tige (5).

8. Dispositif selon l'une quelconque des revendications 1 à 7, caractérisé en ce que la goulotte (4) a une section légèrement supérieure à la section de la tige (5) de rayon, la tête (6) dépassant de la goulotte, et en ce qu'elle est associée à des moyens (9, 10, 24) maintenant la tige avec un faible jeu dans la goulotte.

9. Dispositif selon l'une quelconque des revendications 1 à 7, caractérisé en ce que la goulotte comprend, dans le sens de propulsion des rayons, une première partie (41) à fond (42) arrondi, par exemple demi-circulaire, de section suffisante pour permettre la rotation complète de la tête autour de la tige, et dont le fond est légèrement ascendant dans le sens de progression du rayon, et une seconde partie antérieure (45), se raccordant à la première et admettant le même plan de symétrie longitudinal vertical (40) dont le fond (46) est horizontal et de section demi-circulaire de diamètre légèrement supérieur au diamètre de la tige de rayon.

10. Dispositif selon la revendication 9, caractérisé en ce que le chariot (7) coulisse horizontalement sur le support guide et comprend un racleur (49) articulé, oscillant autour d'un axe (50) transversal horizontal du chariot, dont la partie antérieure (51) est conformée pour s'engager dans la portion large de la goulotte dont elle épouse la forme et dans laquelle elle est plaquée par des moyens de poussée (52), la face frontale du racleur étant conformée en creux (8) et comprenant la facette supérieure (9).

11. Dispositif selon l'une quelconque des revendications 2 à 10, caractérisé en ce que les moyens d'entraînement du chariot (7) produisent deux forces de poussée d'intensités différentes, une première poussée relativement faible, pour l'avance du rayon jusqu'au flasque correspondant du moyeu, telle que le blocage du bout de tige de rayon en butée contre le moyeu produise un flambage faible de la tige, une seconde poussée plus forte, pour l'éjection du rayon après son début d'introduction dans un trou de flasque et commandée par un capteur de position (54) détectant l'introduction du rayon.

12. Dispositif selon l'une quelconque des revendications 2 à 7, caractérisé en ce que les moyens d'entraînement du chariot comprennent un moteur (12) entraînant en rotation bi-directionelle alternative un câble (14) solidaire du chariot, des moyens de commande (20) pour provoquer la rotation du moteur et des moyens détecteurs (17, 18) pour provoquer l'arrêt du moteur et l'inversion de son sens de rotation lorsque le chariot arrive en bout de course.

13. Dispositif selon la revendication 8, caractérisé en ce que le câble solidaire du chariot est tendu entre deux poulies, une première poulie (13) étant sollicitée par le moteur, l'autre poulie (15) étant montée sur un support mobile soumis à des moyens élastiques (16) pour provoquer l'écartement des poulies et la tension du câble selon une force prédéterminée.

14. Dispositif selon l'une quelconque des revendications 2 à 11, caractérisé en ce que les moyens d'entraînement du chariot comprennent un vérin à double effet (53) actionnable selon deux pressions différentes.

15. Dispositif selon l'une quelconque des revendications 1 à 9, caractérisé en ce que le support guide (1) est mobile, sollicité en translation par un vérin à double effet (27) entre une première position dans laquelle l'extrémité antérieure (22) de la goulotte est au voisinage du moyeu et une seconde position dans laquelle la goulotte est en retrait.

16. Dispositif selon la revendication 15, caractérisé en ce que les support guides (55) comprennent en outre une pince (56) pour agripper et serrer le bout de tige du rayon sortant du support guide opposé et traversant un trou du moyeu.

## Inanspruchnahmen

1. Einrichtung zur Positionierung und zum Einführen der Speichen in Löcher, welche auf dem Umfang von den Endflanschen einer Speichenlaufradnabe verteilt sind; die Einrichtung beträgt eine Auflage für die Nabe, eine mit einem Führungsträger (1) verbundene Führungsrutsche (4) für die Speichen, Mittel (27) welche es erlauben, mit Hilfe des Führungsträgers (1) die Rutsche (4) in die Nähe der Nabe zu führen und zu entfernen, Mittel, um die Speichen einzeln in die Rutsche zu bringen, Einrichtung dadurch gekennzeichnet, dass die Nabe auf ihrem Halter so positioniert ist, dass ihre Achse horizontal orientiert ist; die Rutsche (4) ist in eine merklich horizontale Richtung orientiert und nach oben geöffnet; Mittel (7, 12) sind vorgesehen, um eine Speiche in die Rutsche, in Richtung der Nabe, voranzutreiben, und Mittel (9, 10, 24) sind vorgesehen, um den Stiel (5) der Speiche während des Vortriebs in Richtung der Nabe in der Rutsche zu halten.

2. Einrichtung laut Inanspruchnahme 1, dadurch gekennzeichnet, dass die Mittel zum Vortrieb der Speiche einen Schlitten (7) betragen, welcher auf dem Führungsträger (1) verschiebbar ist, angetrieben durch Antriebsmittel zwischen einer ersten Position, in welcher der Schlitten zurückgeschoben ist, um das Einführen einer Speiche in die Rutsche zu erlauben, und einer zweiten Position, in welcher der Schlitten vorgeschoben ist, um den Auslass der Speiche aus der Rutsche auszulösen; der Schlitten beträgt einen Vorderabschnitt, welcher derart gestaltet ist, um teilweise in die Rutsche einzudringen und die Speiche zurückzustossen.

3. Einrichtung laut Inanspruchnahme 2, dadurch gekennzeichnet, dass der Vorderabschnitt ein hohles Gehäuse (8) bildet, um den Kopf der Speiche zu empfangen, und eine obere Facette (9) beträgt, welche einen Anschlag bildet, um den Austritt des Kopfes nach oben zu sperren, sowie einen Boden (10) beträgt, welcher eine Druckfläche bildet, um auf dem Speichenkopf eine Kraft aufzudrücken, welche merklich gemäss der Rutschenachse (4) gerichtet ist.

4. Einrichtung laut irgendeiner der Inanspruchnahmen 1 bis 3, dadurch gekennzeichnet, dass sie ausserdem obere, einziehbare Führungsmittel (23) beträgt, welche sich in der Nähe des vorderen Endes (22) der Rutsche befinden, um den Stiel der Speiche in der Rutsche zu halten, sowie Mittel (26) um das Zurückweichen der Führungsmittel während des Durchgangs des gebogenen Speichenkopfes (6) auszulösen.

5. Einrichtung laut Inanspruchnahme 4, dadurch gekennzeichnet, dass die oberen Führungsmittel einen Hebel (24) betragen, welcher der oberen, geöffneten Seite der Rutsche (4) gegenübersteht, um in der Führungsposition ein geschlossenes Profil zu bilden, welches den Stiel (5) auf einem Abschnitt seiner Länge einspannt; der Hebel ist schwenkbar, um die Rutsche zu befreien und den Durchgang des Speichenkopfes (6) zu erlauben, und wird durch eine vordere Velängerung (26) des Schlittens (7) während seines Vorschubs getrieben, und anschliessend wieder in Führungsposition gebracht, mit Hilfe von Rückstellungsmitteln.

6. Einrichtung laut Inanspruchnahme 5, dadurch gekennzeichnet, dass der Hebel (24) um eine senkrechte Achse (25) schwenkbar ist und gegen die obere, geöffnete Seite der Rutsche (4) gleitet, und dadurch gekennzeichnet, dass seine untere Seite konisch erweitert hohl nach hinten gestaltet ist, um einen Trichter (29) zu bilden und somit das Eindringen einer Speiche unter den Hebel zu erleichtern.

7. Einrichtung laut Inanspruchnahme 6, dadurch gekennzeichnet, dass die Position des Hebels durch Übertragung längs seiner Achse (25) einstellbar ist, um den Abstand zwischen dem Boden der Rutsche und der unteren Fläche des Hebels auf einen Wert einzustellen, der leicht höher liegt als der Durchmesser des Stiels (5).

8. Einrichtung laut irgendeiner der Inanspruchnahmen 1 bis 7, dadurch gekennzeichnet, dass der Querschnitt der Rutsche (4) leicht grösser ist als der Querschnitt des Speichenstiels (5), wobei der Kopf (6) aus der Rutsche hervorragt, und dadurch gekennzeichnet, dass sie mit Mitteln (9, 10, 24) verbunden ist, welche den Stiel mit einem geringen Spiel in der Rutsche halten.

9. Einrichtung laut irgendeiner der Inanspruchnahmen 1 bis 7, dadurch gekennzeichnet, dass die Rutsche, in Richtung des Speichenvortriebs, ein erstes Teil (41) mit abgerundetem Boden (42), zum Beispiel halbrund, beträgt, mit einem genügenden Querschnitt, um die komplette Drehung des Kopfes um den Stiel zu erlauben, und dessen Boden leicht aufsteigend in Richtung der Speichenprogression ist, und ein zweites Vorderteil (45) beträgt, welches sich an das erste Teil anschliesst und die gleiche longitudinale senkrechte Symetrieebene (40) zulässt und dessen Boden (46) waagerecht ist, mit einem halbrunden Querschnitt, welcher etwas grösser ist als der Durchmesser des Speichenstiels.

10. Einrichtung laut Inanspruchnahme 9, dadurch gekennzeichnet, dass der Schlitten (7) horizontal auf dem Führungsträger gleitet und einen gelenkigen Schieber (49) beträgt, welcher um eine transversale waagerechte Achse (50) des Schlittens hin- und herschwankt, dessen Vorderteil (51) derart geformt ist, um sich in den breiten Abschnitt der Rutsche, an deren Form es sich anpasst und an welche es durch Druckmittel angelehnt wird, einzuleiten; die Vorderseite des Schiebers hat eine hohle Form (8) und beträgt die obere Facette (9).

11. Einrichtung laut irgendeiner der Inanspruchnahmen 2 bis 10, dadurch gekennzeichnet, dass die Antriebsmittel des Schlittens (7) zwei Druckkräfte mit veschiedenen Intensitäten erzeugen, ein erster verhältnismässig schwacher Druck für den Vorschub der Speichen bis zum Flansch, welcher der Nabe entspricht, so dass die gegen die Nabe anschlagende Blockierung des Speichentielendes ein leichtes Knicken des Stiels erzeugt, ein zweiter stärkerer Druck für den Auswurf der Speiche nach Beginn ihrer Einleitung in ein Flanschloch, gesteuert durch einen Lagesensor (54), welcher die Einleitung der Speiche ermittelt.

12. Einrichtung laut irgendeiner der Inanspruchnahmen 2 bis 7, dadurch gekennzeichnet, dass die Antriebsmittel des Schlittens einen Motor (12) betragen, welcher ein mit dem Schlitten verbundenes Kabel (14) in hin- und hergehende Zweirichtungsdrehbewegung antreibt, Steuermittel (20) betragen, um die Drehung des Motors auszulösen, und Detektormittel (17, 18) betragen, um das Anhalten des Motors auszulösen und dessen Drehrichtung zu wenden, wenn der Schlitten das Ende der Hublänge erreicht.

13. Einrichtung laut Inanspruchnahme 8, dadurch gekennzeichnet, dass das mit dem Schlitten verbundene Kabel zwischen zwei Scheiben gespannt ist, wobei eine erste Scheibe (13) von dem Motor angezogen wird, und die andere Scheibe (15) auf einem beweglichen Halter montiert ist, welcher elastischen Mitteln (16) unterworfen ist, um den Abstand zwischen den Scheiben und die Spannung des Kabels gemäss einer vorbestimmten Kraft auszulösen.

14. Einrichtung laut irgendeiner der Inanspruchnahmen 2 bis 11, dadurch gekennzeichent, dass die Antriebsmittel des Schlittens einen doppeltwirkenden Zylinder (53) betragen, welcher gemäss zwei verschiedenen Drucken betätigt wird.

15. Einrichtung laut irgendeiner der Inanspruchnahmen 1 bis 9, dadurch gekennzeichnet, dass der Führungsträger (1) beweglich ist, und durch einen doppeltwirkenden Zylinder (27) in Translation beansprucht wird zwischen einer ersten Position, bei welcher das vordere Ende (22) der Rutsche sich in der Nähe der Nabe befindet, und einer zweiten Position, bei welcher die Rutsche zurückgezogen ist.

16. Einrichtung laut Inanspruchnahme 15, dadurch gekennzeichnet, dass die Führungsträger (55) ausserdem eine Klemme (56) betragen, um das Ende des Speichenstiels, welcher aus dem entgegengesetzten Führungsträger herauskommt und ein Nabenloch durchquert, zu greifen und zu klemmen.

## Claims

1. A device for positioning an inserting spokes into the holes arranged peripherally on the side flanges of a spoke wheel hub, the device comprising a hub support, a chute (4) for guiding the spoke rod (5) integral with a guide support (1), means (27) permitting, through the guide support (1) to bring the hub (4) into the vicinity of the hub of a wheel and to remove it therefrom, means for bringing spokes one by one into the chute, characterized in that the hub is positioned on its support with its axis oriented horizontally, the chute (4) is oriented according to a substantially horizontal direction and is opened on its superior side, means (7, 12) are provided for propelling the spoke into the chute towards the hub, and means (9, 10, 24) are provided for holding the rod (5) of the spoke in the chute towards the hub.

2. The device according to claim 1, characterized in that the means for propelling the spoke comprise a carriage (7), sliding on the guide support, driven by drive means between a first position in which the carriage is set back for introducing a spoke into the chute, and a second position in which the carriage is advanced to cause the spoke to leave the chute, the carriage comprising a front portion shaped so as to engage partially in the chute and to push back the spoke.

3. The device according to claim 2, characterized in that the front portion forms a hollow housing (8) for receiving the spoke head and comprises an upper facet (9) forming a stop for preventing the head from leaving upwardly, and a bottom (10) forming a thrust surface for applying to the spoke head a force directed substantially along the axis of the chute (4).

4. The device according to any one of claims 1 to 3, characterized in that it further comprises upper retractable guide means (23) disposed in the vicinity of the front end (22) of the chute for holding the rod of the spoke in the chute, and means (26) for causing the guide means to retract during the passage of the curved head (6) of the spoke.

5. The device according to claim 4, characterized in that the upper guide means comprise a lever (24) facing the upper open face of the chute (4) for forming in the guide position a closed profile enclosing the rod (5) over a portion of its length, the lever being pivotable for freeing the chute and allowing the spoke head (6) to pass, pushed by a front extension (26) on the carriage (7) during the advance thereof, then brought back to a guide position by return means.

6. The device according to claim 5, characterized in that the lever (24) pivots about a vertical pin (25) an slides against the upper open face of the chute (4), and in that its lower face is recessed rearwardly to form a funnel (29) for facilitating the penetration of a spoke under the lever.

7. The device according to claim 6, characterized in that the position of the lever is adjustable by translation along its pivot pin (25) for adjusting the distance between the bottom of the chute and the lower surface of the lever to a value slightly greater than the diameter of the rod (5).

8. The device according to any one of claims 1 to 7, characterized in that the chute (4) has a section slightly greater than the section of the spoke rod (5), the head (6) extending from the chute, and in that it is associated with means (9, 10, 24) holding the rod with a small clearance in the chute.

9. The device according to any one of claims 1 to 7, characterized in that the chute comprises, in the propelling direction of the spokes, a first part (41) with a rounded bottom (42), for example semicircular, having a section sufficient to allow complete rotation of the head about the rod, and whose bottom rises slightly in the feed direction of the spoke, and a second front part (45), connected to the first one and having the same longitudinal vertical plane of symmetry (40) whose botom (46) is horizontal and having a semi-circular section whose diameter is slightly greater than the diameter of the spoke rod.

10. The device according to claim 9, characterized in that the carriage (7) slides horizontally on the guide support and comprises a scraper (49) pivoting about a horizontal transverse pin (50) on the carriage, whose front part (51) is shaped so as to engage in the wide portion of the chute to whose shape it corresponds and into which it is urged by thrust means (52), the front face of the scraper being recessed (8) and comprising the upper facet (9).

11. The device according to any one of claims 2 to 10, characterized in that the means for driving the carriage (7) produce two thrust forces of different intensities, a first relatively low thrust force, for causing the spoke to advance as far as the corresponding flange of the hub, so that jamming of the spoke rod end in abutment against the hub produces a small lateral flexion of the rod, a second higher thrust force, for ejecting the spoke once its introduction into a flange hole has begun and controlled by a position sensor (54) detecting the introduction of the spoke.

12. The device according to any one of claims 2 to 7, characterized in that the means for driving the carriage comprise a motor (12) rotating alternately in both directions a cable (14) firmly attached to the carriage, control means (20) for causing the motor to rotate and detection means (17, 18) for causing the motor to stop and reverse its direction of rotation when the carriage arrives at the end of its travel.

13. The device according to claim 8, characterized in that the cable firmly attached to the carriage is stretched between two pulleys, a first pulley (13) being urged by the motor, the other pulley (15) being mounted on a mobile support subjected to the action of resilient means (16) for causing the pulleys to move apart and tensioning the cable with a predetermined force.

14. The device according to any one of claims 2 to 11, characterized in that the means for driving the carriage comprise a double-action piston and cylinder device (53) actuable at two different pressures.

15. The device according to any one of claims 1 to 9, characterized in that the guide support (1) is mobile, urged in translation by a double-acting piston and cylinder device (27) between a first position in which the front end (22) of the chute is in the neighbourhood of the hub and second position in which the chute is retracted.

16. The device according to claim 15, characterized in that the guide supports (55) further comprise a clip (56) for gripping round and clamping the end of the rod of the spoke leaving the opposite guide support and passing through a hole in the hub.

fig. 1

fig. 2

fig. 3

fig. 4
A-A

fig. 5

fig. 6

fig. 7    B-B

fig. 8